# EUROPÄISCHE PATENTANMELDUNG

(11) **EP 4 831 524 A1**
(43) Veröffentlichungstag der Anmeldung: **28.10.2026**
(21) Anmeldenummer: 26173385.1
(22) Anmeldetag: 20.04.2026
(51) Int. Cl.: F16L 19/06, F16L 21/03, F16L 21/08, F16L 37/05

(54) **ANSCHLUSSVORRICHTUNG FÜR EINE ROHRLEITUNG**

(30) Priorität: 25.04.2025 AT 502812025
(71) Anmelder: E. Hawle Armaturenwerke GmbH, 4840 Vöcklabruck (AT)
(72) Erfinder: Oberegger, Gerald, 4800 Attnang-Puchheim (AT)
(74) Vertreter: Puchberger & Partner Patentanwälte

(57) **Zusammenfassung**

Die Erfindung betrifft eine Anschlussvorrichtung für eine Rohrleitung (1), wobei die Anschlussvorrichtung eine im Wesentlichen hohlzylindrische Steckmuffe (2) umfasst, die einen Steckabschnitt (3) zur Aufnahme der Rohrleitung (1), einen gegenüberliegenden Anschlussstutzen (4) mit einem Innendurchmesser d_{A}, der kleiner ist als der Innendurchmesser d₁ des Steckabschnitts (3), wodurch am inneren Umfang der Steckmuffe (2) ein Anschlag (5) für die Rohrleitung gebildet ist, eine am inneren Umfang des Steckabschnitts (3) angeordnete ringförmige Nut (6), in der ein Dichtring (7) angeordnet ist, aufweist, und eine im Wesentlichen hohlzylindrische Spannhülse (8), die eine Einschuböffnung (9) zum Einschieben der Rohrleitung (1), eine Ausnehmung (10) zur bündigen und formschlüssigen Aufnahme des Steckabschnitts (3) der Steckmuffe (2), aufweist, und die ein Fixierelement (11) zum Fixieren der Spannhülse (8) an der Steckmuffe (2) umfasst, wobei am inneren Umfang der Spannhülse (8) ein elastisches Klemmelement (12) zur kraftschlüssigen Befestigung der Rohrleitung (1) in der Spannhülse (8) angeordnet ist, wobei das erste Ende des Klemmelements (12) mit der Spannhülse (8) und das zweite Ende des Klemmelements (12) mit der Steckmuffe (2) fest verbunden ist.

## Beschreibung

Die Erfindung betrifft eine Anschlussvorrichtung zur Verbindung einer Rohrleitung mit anderen Rohrleitungskomponenten.

Im Stand der Technik sind Anschlussvorrichtungen bekannt, die vielseitig in Rohrleitungssystemen einsetzbar sind, um beispielsweise Rohre verschiedener Durchmesser zu verbinden, Winkel zu erzeugen oder Übergänge zu ermöglichen.

Häufig verwendete Anschlussvorrichtungen basieren auf Gewinden, die durch Drehen ineinander geschraubt werden, um eine dichte Verbindung zu schaffen. Andere Anschlussvorrichtungen umfassen Pressfittings, bei denen ein Fitting mit einem speziellen Werkzeug auf das Rohr gepresst wird. Durch den Druck wird ein Dichtring in das Fitting gedrückt und sorgt für eine dichte Verbindung.

Für die Montage oder Demontage von Anschlussvorrichtungen ist oft ein spezielles Werkzeug notwendig. Es kann bei der Demontage zu einer nicht-reversiblen Zerstörung der Dichtung oder anderer Komponenten kommen. Die Anschlussvorrichtungen müssen in Folge ausgetauscht werden und können nicht wiederverwendet werden.

Ziel der vorliegenden Erfindung ist es, dieses und weitere Probleme zu überwinden.

Insbesondere ist es eine Aufgabe der Erfindung, eine wiederverwendbare Anschlussvorrichtung zur Verfügung zu stellen. Eine Aufgabe der Erfindung kann sein, eine besonders leicht demontierbare Anschlussvorrichtung zur Verfügung zu stellen. Eine Aufgabe der Erfindung kann ferner sein, eine Anschlussvorrichtung zur Verfügung zu stellen, die ohne Werkzeug montiert und demontiert werden kann.

Diese und weitere Aufgaben werden durch eine Anschlussvorrichtung gemäß den Patentansprüchen gelöst.

Erfindungsgemäß ist eine Anschlussvorrichtung für eine Rohrleitung vorgesehen, die eine im Wesentlichen hohlzylindrische **Steckmuffe** umfasst, wobei die Steckmuffe einen Steckabschnitt zur Aufnahme der Rohrleitung umfasst. Die Steckmuffe umfasst ferner einen gegenüberliegenden Anschlussstutzen mit einem Innendurchmesser d_{A}, der kleiner ist als der Innendurchmesser d₂ des Steckabschnitts, wodurch am inneren Umfang der Steckmuffe ein Anschlag für die Rohrleitung gebildet ist. Am inneren Umfang der Steckmuffe ist ferner eine ringförmige Nut mit einem Dichtring vorgesehen.

Die Anschlussvorrichtung umfasst ferner eine im Wesentlichen hohlzylindrische **Spannhülse** mit einer Einschuböffnung zum Einschieben der Rohrleitung und einer Ausnehmung zur bündigen und formschlüssigen Aufnahme des Steckabschnitts.

Ferner ist ein **Fixierelement** zum vorzugsweise manuellen Fixieren der Spannhülse an der Steckmuffe vorgesehen.

Erfindungsgemäß befindet sich zwischen der Spannhülse und der Steckmuffe ein **elastisches Klemmelement** zur kraftschlüssigen Befestigung der Rohrleitung in der Spannhülse. Zur Befestigung ist das erste Ende des Klemmelements mit der Spannhülse und das zweite Ende des Klemmelements mit der Steckmuffe verbunden.

Das Klemmelement kann vorzugsweise zwischen dem inneren Umfang der Steckmuffe und dem äußeren Umfang der Spannhülse angeordnet sein.

Das Klemmelement kann dazu ausgebildet sein, dass es unter mechanische Spannung einen geringeren Durchmesser aufweist, als im entspannten Zustand. Dadurch fixiert es beim Aufbringen einer mechanischen Spannung die eingeführte Rohrleitung in ihrer Position und wirkt einer Entfernung der Rohrleitung entgegen.

Die Spannhülse, die Steckmuffe und das Fixierelement umfassen oder bestehen vorzugsweise aus Kunststoff oder Metall. Der Anschlussstutzen weist gegebenenfalls ein Gewinde zur Verbindung mit weiteren Komponenten eines Rohrleitungssystems auf.

Gegebenenfalls ist vorgesehen, dass das Klemmelement, eine **Freigabestellung** aufweist, die derart ausgebildet ist, dass kein Kraftschluss zur Rohrleitung gebildet ist, und eine **Befestigungsstellung** aufweist, die derart ausgebildet ist, dass eine kraftschlüssige Verbindung zur Rohleitung gebildet ist. Hierdurch kann die Rohrleitung eingeführt, fixiert und auch wieder freigegeben werden. Das Klemmelement ist vorzugsweise in der Befestigungsstellung unter Spannung. Vorzugsweise weist das Klemmelement in der Freigabestellung einen größeren Durchmesser auf als in der Befestigungsstellung.

Es kann vorgesehen sein, dass das Klemmelement durch Drehen der Steckmuffe relativ zur Spannhülse von der Freigabestellung in die Befestigungsstellung bringbar ist. Durch das Verdrehen kann das Klemmelement unter Spannung gebracht werden.

Gegebenenfalls ist vorgesehen, dass das Klemmelement spiralförmig, insbesondere als **Spiralfeder,** ausgebildet ist. Diese Ausführungsform hat sich in der Praxis als vorteilhaft herausgestellt.

Es kann vorgesehen sein, dass die Spannhülse an ihrem von der Einschuböffnung abgewandten Ende einen **Flansch** umfasst, wobei die Steckmuffe am äußeren Umfang des Steckabschnitts einen radial nach außen vorspringenden umlaufenden **Kragen** umfasst, wobei die ringförmigen Stirnseiten des Flansches und des Kragens einander zugewandt sind, sodass eine bündig abschließende **Stoßfläche** gebildet ist, und wobei die Stirnseiten des Flansches und des Kragens Verbindungsmittel umfassen.

Durch die Verbindungsmittel können die Steckmuffe und die Spannhülse formschlüssig miteinander verbunden werden, sodass die Spannhülse und die Steckmuffe vorzugsweise nicht um eine Längsachse L relativ zueinander verdrehbar sind.

Gegebenenfalls ist vorgesehen, dass die Verbindungsmittel als Zähne, insbesondere als **Hirth-Verzahnung,** ausgebildet sind. Die Zähne können ineinandergreifen, wodurch die Spannhülse und die Steckmuffe um die Längsachse L relativ zueinander fixiert sind, wenn die Stoßflächen einander berühren.

Es kann vorgesehen sein, dass eine sich über den inneren Umfang der Spannhülse und des Steckabschnitts der Steckmuffe erstreckende ringförmig umlaufende Kammer zur Aufnahme des Klemmelements vorgesehen ist, wobei sich die Kammer über zumindest 40% der Längserstreckung der Anschlussvorrichtung erstreckt. Hierdurch ist ausreichend Platz für das Klemmelement vorhanden. Hierdurch kann die Rohrleitung leichter in die Anschlussvorrichtung eingeschoben werden.

Gegebenenfalls ist vorgesehen, dass zwischen der Kammer der Steckmuffe und der Nut ein ringförmiger Materialsteg vorgesehen ist. Hierdurch können Dichtring und Klemmelement separat voneinander angeordnet sein.

Es kann vorgesehen sein, dass die Ausnehmung als am inneren Umfang der Spannhülse angeordnete ringförmige Vertiefung ausgebildet ist.

Gegebenenfalls ist vorgesehen, dass das Fixierelement als **Manschette** ausgebildet ist, die sich zumindest über einen Teil der Steckmuffe und der Spannhülse, insbesondere um den Flansch und den Kragen, erstreckt. Da das Fixierelement sich sowohl über die Steckmuffe als auch über die Spannhülse erstreckt, kann es beide Elemente fixieren, sodass diese verdrehsicher und ausziehsicher fixiert sind.

Es kann vorgesehen sein, dass das Fixierelement eine stirnseitige Auskragung umfasst, wobei die Auskragung eine Anschlagfläche um den äußeren Umfang des Flansches bildet. Am inneren Umfang des Fixierelements kann ein Gewinde vorgesehen sein.

In diesem Fall kann der Kragen einen ringförmig am äußeren Umfang angeordneten Vorsprung umfassen, wobei der Vorsprung am äußeren Umfang ein Gewinde umfasst, sodass das Fixierelement und die Steckmuffe miteinander verschraubbar sind..

Gegebenenfalls ist vorgesehen, dass das erste und das zweite Ende des Klemmelements durch eine **stoffschlüssige Verbindung,** beispielsweise eine Schweißverbindung, oder eine Nietverbindung an der Steckmuffe und der Spannhülse befestigt sind. Gegebenenfalls sind am ersten und am zweiten Ende des Klemmelements Aussparungen zur Aufnahme eines Befestigungsmittels, beispielsweise einer Niete vorgesehen.

Es kann vorgesehen sein, dass das Klemmelement Metall umfasst oder aus Metall besteht, beispielsweise aus Federstahl. Gegebenenfalls umfasst oder besteht das Klemmelement aus einem elastischen Kunststoff oder einem elastischen Verbundmaterial.

Weitere erfindungsgemäße Merkmale ergeben sich aus den Ansprüchen, der Beschreibung der Ausführungsbeispiele und den Figuren. Die Erfindung wird nachfolgend anhand von Figuren erläutert, welche exemplarische Ausführungsbeispiele zeigen:
Fig. 1 zeigt eine schematische Querschnittsansicht einer erfindungsgemäßen Anschlussvorrichtung, in die eine Rohrleitung eingesteckt ist.
Fig. 2 zeigt eine schematische Schrägansicht der Anschlussvorrichtung der Fig. 1 von außen.
Fig. 3 zeigt eine schematische Explosionsdarstellung der Anschlussvorrichtung aus Fig. 2.

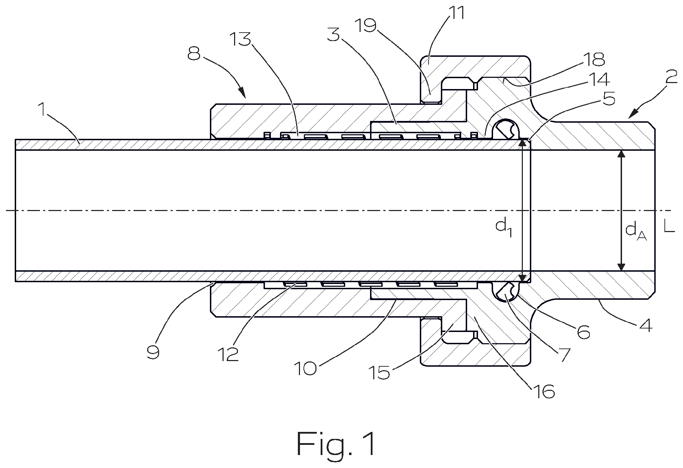

**Fig. 1** zeigt eine schematische Querschnittsansicht einer erfindungsgemäßen Anschlussvorrichtung. In die Anschlussvorrichtung ist eine Rohrleitung 1 eingesteckt. Die Anschlussvorrichtung umfasst eine hohlzylindrische Steckmuffe 2, wobei die Steckmuffe 2 einen Steckabschnitt 3 aufweist, der zur Aufnahme der Rohrleitung 1 ausgebildet ist.

Gegenüber dem Steckabschnitt 3 ist ein Anschlussstutzen 4 angeordnet. Der Steckabschnitt 3 hat einen Innendurchmesser d₁ und der Anschlussstutzen hat einen Innendurchmesser d_{A}, wobei der Innendurchmesser d_{A} kleiner ist als der Innendurchmesser d₁. Dadurch ist am inneren Umfang der Steckmuffe 2 ein Anschlag 5 für die Rohleitung 1 gebildet. Die eingeführte Rohrleitung ist angefast. In diesem Ausführungsbeispiel ist die Rohrleitung 1 bis zum Anschlag in die Steckmuffe 2 eingeführt. Am inneren Umfang des Steckabschnitts 3 ist eine ringförmige Nut 6 angeordnet, in der ein Dichtring 7 angeordnet ist.

Die Anschlussvorrichtung umfasst ferner eine hohlzylindrische Spannhülse 8. Die Spannhülse 8 umfasst eine Einschuböffnung 9 zum Einschieben der Rohrleitung 1. Der Durchmesser der Einschuböffnung entspricht im Wesentlichen dem Innendurchmesser d₁ des Steckabschnitts 3 der Steckmuffe 2.

Die Spannhülse 8 umfasst ferner eine Ausnehmung 10 zur bündigen und formschlüssigen Aufnahme des Steckabschnitts 3 der Steckmuffe 2. Die Ausnehmung 10 ist als am inneren Umfang der Spannhülse 8 angeordnete ringförmige Vertiefung ausgebildet. Die Ausnehmung 10 kann aber auch anders ausgebildet sein.

Über einen Teil des inneren Umfangs der Spannhülse 8 und des Steckabschnitts 3 der Steckmuffe 2 erstreckt sich eine ringförmig umlaufende Kammer 13. Die Kammer 13 ist zur Aufnahme eines Klemmelements 12 vorgesehen. Die Kammer 13 erstreckt sich zumindest über etwa 40% der Längserstreckung der Anschlussvorrichtung. Zwischen der Kammer 13 der Steckmuffe 2 und der Nut 6 ist ein ringförmiger Materialsteg 14 angeordnet. Der Materialsteg 14 hat einen Innendurchmesser, der im Wesentlichen dem Innendurchmesser d₁ der Steckmuffe 2 entspricht.

Am inneren Umfang der Spannhülse 8 und der Steckmuffe 2 ist ein elastisches Klemmelement 12 angeordnet. In diesem Ausführungsbeispiel ist das Klemmelement 12 in der Kammer 13 angeordnet. Das erste Ende des Klemmelements 12 ist mit der Spannhülse 8 fest verbunden und das zweite Ende des Klemmelements 12 mit der Steckmuffe 2 fest verbunden. Die Verbindung kann als Nietverbindung ausgebildet sein.

Das Klemmelement 12 ist als spiralförmige Klemme ausgebildet. Das Klemmelement 12 spiralförmig, in diesem Fall als Spiralfeder, ausgebildet.

Die Spannhülse 8 umfasst ferner an ihrem von der Einschuböffnung 9 abgewandten Ende einen Flansch 15. Die Steckmuffe 2 umfasst am äußeren Umfang des Steckabschnitts 3 einen radial nach außen vorspringenden umlaufenden Kragen 16. Die ringförmigen Stirnseiten des Flansches 15 und des Kragens 16 sind einander zugewandt, sodass eine bündig abschließende Stoßfläche gebildet ist. Die Stirnseiten des Flansches 15 und des Kragens 16 weisen Verbindungsmittel 17 zur formschlüssigen Verbindung der Spannhülse 8 und der Steckmuffe 2 auf. Die Verbindungsmittel 17 sind als Hirth-Verzahnung ausgebildet.

Die Anschlussvorrichtung umfasst ferner ein Fixierelement 11 zum Fixieren der Spannhülse 8 an der Steckmuffe 2. Das Fixierelement 11 ist als Manschette ausgebildet, die sich über einen Teil der Steckmuffe 2 und der Spannhülse 8 erstreckt. In diesem Ausführungsbeispiel umgibt das Fixierelement 11 hauptsächlich den Flansch 15 und den Kragen 16.

Das Fixierelement 11 weist eine stirnseitige Auskragung 19 auf. Die Auskragung 19 bildet eine Anschlagfläche um den äußeren Umfang des Flansches 15. Am inneren Umfang des Fixierelements 11 ist ein Gewinde angeordnet.Ferner umfasst der Kragen 16 der Steckmuffe 2 einen ringförmig am äußeren Umfang angeordneten Vorsprung 18. Am äußeren Umfang des Vorsprungs 18 ist ein Gewinde angeordnet. Das Gewinde des Fixierelements und das Gewinde des Vorsprungs 18 sind derart ausgebildet, dass eine Schraubverbindung zwischen der Steckmuffe 2 und dem Vorsprung 18 gebildet ist.

Das Klemmelement 12, in diesem Fall die spiralförmige Klemme, ist elastisch ausgebildet. In einer Freigabestellung der Anschlussvorrichtung ist die spiralförmige Klemme derart ausgebildet und in der Anschlussvorrichtung angeordnet, dass eine Rohrleitung 1 eingesteckt werden kann. In der Freigabestellung ist kein Kraftschluss mit einer Rohrleitung 1 gebildet.

In einer Befestigungsstellung ist das Klemmelement 12 derart ausgebildet, dass eine kraftschlüssige Verbindung zur Rohrleitung 1 hergestellt ist. Durch Drehen der Steckmuffe 2 relativ zur Spannhülse 8 ist das Klemmelement 12 von der Freigabestellung in die Befestigungsstellung bringbar.

Während das Klemmelement 12 von der Freigabestellung in die Befestigungsstellung gebracht wird, ist das Fixierelement 11 nicht in seiner fixierenden Stellung angeordnet, um das Verdrehen Steckmuffe 2 gegenüber der Spannhülse 8 zu erlauben. Da im Ausführungsbeispiel der Fig. 1 die Verbindungsmittel 17 als Hirth-Verzahnung ausgebildet sind, sind die Steckmuffe 2 und die Spannhülse 8 beim Verdrehen derart voneinander beabstandet angeordnet, dass die Verbindungsmittel 17 nicht ineinander eingreifen.

Im vorliegenden Ausführungsbeispiel werden die Steckmuffe 2 und die Spannhülse 8 gegeneinander verdreht, sodass das spiralförmige Klemmelement 12 unter Spannung gebracht wird, sich zusammenzieht und der Durchmesser sich verringert. Durch das Verdrehen und daraus resultierende Verringerung des Durchmessers der spiralförmigen Klemme wird die Rohrleitung 1 durch radial auf den äußeren Umfang der Rohrleitung wirkende Druckkräfte in der Anschlussvorrichtung fixiert. Sollte ferner versucht werden, die Rohrleitung aus der Anschlussvorrichtung zu entfernen, zieht sich das Klemmelement 12 noch fester und fungiert somit auch als Zugsicherung.

Sobald die Befestigungsstellung erreicht ist, wird das Fixierelement 11 über den Flansch 15 und den Kragen 16 geschoben, und das Fixierelement 11 und die Steckmuffe 2 werden miteinander verschraubt.

Hierdurch greifen die Verbindungmittel 17 ineinander ein, sodass die Steckmuffe 2 und die Spannhülse 8 formschlüssig und kraftschlüssig miteinander verbunden sind. Das Klemmelement 12 ist somit verdrehsicher arretiert und kann nicht in die Freigabestellung ohne Entfernung des Fixierelements 11 zurückkehren.

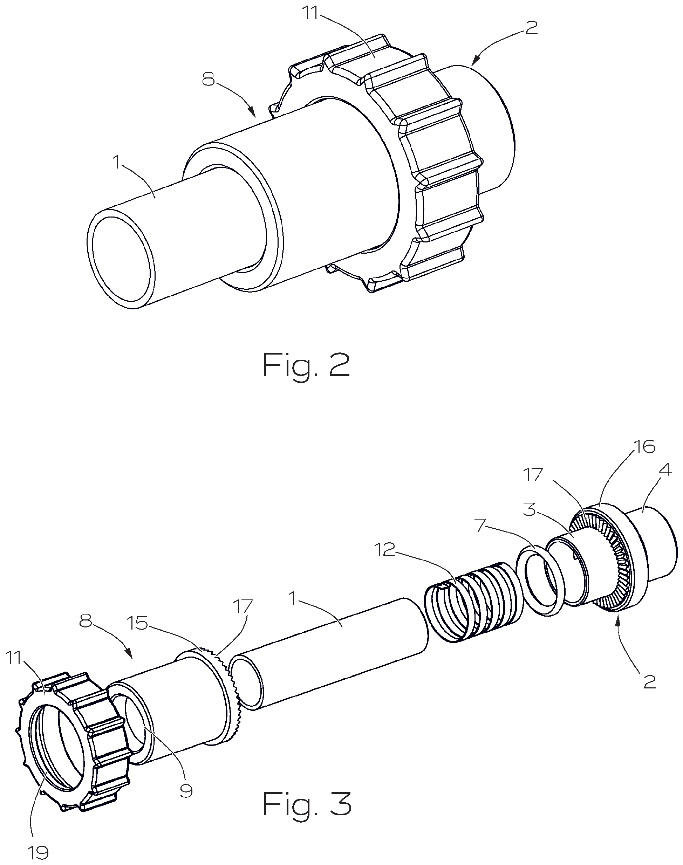

**Fig. 2** zeigt eine schematische Schrägansicht der Anschlussvorrichtung aus Fig. 1 von außen. Eine Rohrleitung 1 ist in die Einschuböffnung 9 eingeschoben. Die Steckmuffe 2 und die Spannhülse 8 sind ineinandergesteckt. Das Fixierelement 11 ist um den nicht dargestellten Kragen 16 und den nicht dargestellten Flansch 16 angeordnet.

**Fig. 3** zeigt eine schematische Explosionsdarstellung der Anschlussvorrichtung der Fig. 1. Es ist ebenfalls eine Rohrleitung 1 dargestellt. Die Anschlussvorrichtung umfasst die hohlzylindrische Steckmuffe 2, wobei die Steckmuffe 2 einen Steckabschnitt 3 aufweist, der zur Aufnahme der Rohrleitung 1 ausgebildet ist. Gegenüber dem Steckabschnitt 3 ist der Anschlussstutzen 4 angeordnet.

Die Anschlussvorrichtung umfasst ferner eine hohlzylindrische Spannhülse 8. Die Spannhülse 8 umfasst eine Einschuböffnung 9 zum Einschieben der Rohrleitung 1. Die Spannhülse 8 umfasst ferner eine nicht dargestellte Ausnehmung 10 zur bündigen und formschlüssigen Aufnahme des Steckabschnitts 3 der Steckmuffe 2.

Ferner ist das elastisches Klemmelement 12 gezeigt, das am inneren Umfang der Spannhülse 8 und der Steckmuffe 2 anordenbar ist. Das erste Ende des Klemmelements 12 ist dazu ausgebildet, mit der Spannhülse 8 fest verbunden zu werden, und das zweite Ende des Klemmelements 12 ist dazu ausgebildet, mit der Steckmuffe 2 fest verbunden zu werden. Die Verbindung kann beispielsweise als Nietverbindung ausgebildet sein.

Das Klemmelement 12 ist als spiralförmige Klemme ausgebildet. Das Klemmelement 12 ist als Spiralfeder ausgebildet.

Die Spannhülse 8 umfasst ferner an ihrem von der Einschuböffnung 9 abgewandten Ende einen Flansch 15.

Die Steckmuffe umfasst 2 am äußeren Umfang des Steckabschnitts 3 einen radial nach außen vorspringenden umlaufenden Kragen 16. Die ringförmigen Stirnseiten des Flansches 15 und des Kragens 16 sind einander zugewandt, sodass eine Stoßfläche gebildet ist, die bündig abschließen kann.

Die Stirnseiten des Flansches 15 und des Kragens 16 weisen Verbindungsmittel 17 zur formschlüssigen Verbindung der Spannhülse 8 und der Steckmuffe 2 auf. Die Verbindungsmittel 17 sind als Hirth-Verzahnung ausgebildet.

Die Anschlussvorrichtung umfasst ferner ein Fixierelement 11 zum Fixieren der Spannhülse 8 an der Steckmuffe 2. Das Fixierelement 11 ist als Manschette ausgebildet, die sich über einen Teil der Steckmuffe 2 und der Spannhülse 8 erstreckt. In diesem Ausführungsbeispiel umgibt das Fixierelement 11 hauptsächlich den Flansch 15 und den Kragen 16.

Das Fixierelement 11 weist eine stirnseitige Auskragung 19 auf. Die Auskragung 19 bildet eine Anschlagfläche um den äußeren Umfang des Flansches 15. Das Fixierelement 11 ist derart ausgebildet, dass es eine lösbare Schraubverbindung bildet, sodass die Steckmuffe 2 und die Spannhülse 8 verdrehsicher miteinander fixierbar sind.

### Bezugszeichenliste

- 1: Rohrleitung
- 2: Steckmuffe
- 3: Steckabschnitt
- 4: Anschlussstutzen
- 5: Anschlag
- 6: Nut
- 7: Dichtring
- 8: Spannhülse
- 9: Einschuböffnung
- 10: Ausnehmung
- 11: Fixierelement
- 12: Klemmelement
- 13: Kammer
- 14: Materialsteg
- 15: Flansch
- 16: Kragen
- 17: Verbindungsmittel
- 18: Vorsprung
- 19: Auskragung

## Patentansprüche

1. Anschlussvorrichtung für eine Rohrleitung (1), umfassend:
a) eine im Wesentlichen hohlzylindrische **Steckmuffe (2)** umfassend:
- einen Steckabschnitt (3) zur Aufnahme der Rohrleitung (1),
- einen gegenüberliegenden Anschlussstutzen (4) mit einem Innendurchmesser d_{A}, der kleiner ist als der Innendurchmesser d₁ des Steckabschnitts (3), wodurch am inneren Umfang der Steckmuffe (2) ein Anschlag (5) für die Rohrleitung gebildet ist,
- eine am inneren Umfang des Steckabschnitts (3) angeordnete ringförmige Nut (6), in der ein Dichtring (7) angeordnet ist,
b) eine im Wesentlichen hohlzylindrische **Spannhülse** (8) umfassend:
- eine Einschuböffnung (9) zum Einschieben der Rohrleitung (1),
- eine Ausnehmung (10) zur bündigen und formschlüssigen Aufnahme des Steckabschnitts (3) der Steckmuffe (2),
c) ein Fixierelement (11) zum Fixieren der Spannhülse (8) an der Steckmuffe (2), **dadurch gekennzeichnet, dass**
d) zwischen der Steckmuffe (2) und der Spannhülse (8) ein **elastisches Klemmelement** (12) zur kraftschlüssigen Befestigung der Rohrleitung (1) in der Spannhülse (8) angeordnet ist, wobei
e) das erste Ende des Klemmelements (12) mit der Spannhülse (8) und das zweite Ende des Klemmelements (12) mit der Steckmuffe (2) fest verbunden ist.

2. Anschlussvorrichtung nach Anspruch 1, **dadurch gekennzeichnet, dass** das Klemmelement (12),
- eine **Freigabestellung** aufweist, die derart ausgebildet ist, dass kein Kraftschluss zur Rohrleitung (1) gebildet ist, und
- eine **Befestigungsstellung** aufweist, die derart ausgebildet ist, dass eine kraftschlüssige Verbindung zur Rohleitung (1) gebildet ist.

3. Anschlussvorrichtung nach Anspruch 2, **dadurch gekennzeichnet, dass** das Klemmelement (12) durch Drehen der Steckmuffe (2) relativ zur Spannhülse (8) von der Freigabestellung in die Befestigungsstellung bringbar ist.

4. Anschlussvorrichtung nach einem der Ansprüche 1 bis 3, **dadurch gekennzeichnet, dass** das Klemmelement (12) spiralförmig, insbesondere als Spiralfeder, ausgebildet ist.

5. Anschlussvorrichtung nach einem der Ansprüche 1 bis 4, **dadurch gekennzeichnet, dass**
- die Spannhülse (8) an ihrem von der Einschuböffnung (9) abgewandten Ende einen Flansch (15) umfasst, wobei
- die Steckmuffe (2) am äußeren Umfang des Steckabschnitts (3) einen radial nach außen vorspringenden umlaufenden Kragen (16) umfasst, wobei
- die ringförmigen Stirnseiten des Flansches (15) und des Kragens (16) einander zugewandt sind, sodass eine bündig abschließende Stoßfläche gebildet ist, und wobei
- die Stirnseiten des Flansches (15) und des Kragens (16) Verbindungsmittel (17) umfassen.

6. Anschlussvorrichtung nach Anspruch 5, **dadurch gekennzeichnet, dass** die Verbindungsmittel (17) als Zähne, insbesondere als Hirth-Verzahnung, ausgebildet sind.

7. Anschlussvorrichtung nach einem der Ansprüche 1 bis 6, **dadurch gekennzeichnet, dass** eine sich über den inneren Umfang der Spannhülse (8) und des Steckabschnitts (3) der Steckmuffe (2) erstreckende ringförmig umlaufende Kammer (13) zur Aufnahme des Klemmelements (12) vorgesehen ist, wobei sich die Kammer (13) über zumindest 40% der Längserstreckung der Anschlussvorrichtung erstreckt.

8. Anschlussvorrichtung nach Anspruch 7, **dadurch gekennzeichnet, dass** zwischen der Kammer (13) der Steckmuffe (2) und der Nut (6) ein ringförmiger Materialsteg (14) vorgesehen ist.

9. Anschlussvorrichtung nach einem der Ansprüche 1 bis 8, **dadurch gekennzeichnet, dass** die Ausnehmung (10) als am inneren Umfang der Spannhülse (8) angeordnete ringförmige Vertiefung ausgebildet ist.

10. Anschlussvorrichtung nach einem der Ansprüche 1 bis 9, **dadurch gekennzeichnet, dass** das Fixierelement (11) als Manschette ausgebildet ist, die sich zumindest über einen Teil der Steckmuffe (2) und der Spannhülse (8), insbesondere um den Flansch (15) und den Kragen (16), erstreckt.

11. Anschlussvorrichtung nach einem der Ansprüche 5 bis 10, **dadurch gekennzeichnet, dass**
- das Fixierelement (11) eine stirnseitige Auskragung (19) umfasst, wobei die Auskragung (19) eine Anschlagfläche um den äußeren Umfang des Flansches (15) bildet, wobei
- am inneren Umfang des Fixierelements (11) ein Gewinde vorgesehen ist, und wobei
- der Kragen (16) einen ringförmig am äußeren Umfang angeordneten Vorsprung (18) umfasst,
- wobei der Vorsprung (18) am äußeren Umfang ein Gewinde umfasst, sodass das Fixierelement (11) und die Steckmuffe (2) miteinander verschraubbar sind.

12. Anschlussvorrichtung nach einem der Ansprüche 1 bis 11, **dadurch gekennzeichnet, dass** das erste und das zweite Ende des Klemmelements (12) durch eine stoffschlüssige Verbindung, beispielsweise eine Schweißverbindung, oder eine Nietverbindung an der Steckmuffe (2) und der Spannhülse (8) befestigt sind.

13. Anschlussvorrichtung nach einem der Ansprüche 1 bis 12, **dadurch gekennzeichnet, dass** das Klemmelement (12) Metall umfasst oder aus Metall besteht.
